# EUROPEAN PATENT APPLICATION

(11) **EP 3 702 107 A1**
(43) Date of publication of application: **02.09.2020**
(21) Application number: 19159733.5
(22) Date of filing: 27.02.2019
(51) Int. Cl.: B25J 9/16, G05B 19/408

(54) **AUTOMATED STACKING ARRANGEMENT**

(71) Applicant: Granta Automation Ltd, Whittlesford, Cambridge CB22 4XL (GB)
(72) Inventor: SMITH, David, Cambridge, Cambridgeshire CB22 4XL (GB); HETHERINGTON, Ryan, Cambridge, Cambridgeshire CB22 4XL (GB); MARSH, Roger, Cambridge, Cambridgeshire CB22 4XL (GB); YATES, Justin, Cambridge, Cambridgeshire CB22 4XL (GB); MARSH, Derek, Cambridge, Cambridgeshire CB22 4XL (GB); MARSH, Mark, Cambridge, Cambridgeshire CB22 4XL (GB); MARSH, Joseph, Cambridge, Cambridgeshire CB22 4XL (GB); MARSH, John, Cambridge, Cambridgeshire CB22 4XL (GB); MARSH, Matthew, Cambridge, Cambridgeshire CB22 4XL (GB); KOVALIOVAS, Juozas, Cambridge, Cambridgeshire CB22 4XL (GB)
(74) Representative: CSY London

(57) **Abstract**

A method and apparatus for of generating control commands for a robot to cause it to produce a stack of items, by accepting user input of a 3D coordinate of a base frame position, accepting user input of a 3D coordinate of a pre-place position, receiving a 3D digital model of the stack with stack coordinates for each item stored relative to a known reference coordinate, sorting the coordinates for each item into a list of items sorted in vertical position in the stack, extracting an item's 3D coordinates from the item list in order, generating a placing coordinate by processing an item's 3D coordinates to apply an offset to each coordinate which is difference between the reference coordinate and the base frame position, issuing a control command to cause the robot to move to the pre-place coordinate position, issuing a control command to cause the robot to move to the placing coordinate position, repeating the loop[until the entire item list has been traversed. Optionally, receiving a 3D digital model of the stack by interrogating the 3D model of the stack by cycling through each item and retrieving the 3D coordinates of each item, and storing the retrieved coordinates in the item list, with an entry for each item.

## Description

This invention relates to a method of optimising automated packing of a plurality of stackable objects and apparatus for optimising automated packing of a plurality of stackable objects.

This invention attempts to solve common problems encountered when adding robotics to a typical production operation. In particular, this relates to the type of operation in which objects, such as boxed products, need to be stacked in a predefined volume such as for loading on a pallet prior to transportation. Normally, when an investment of this type is considered, the end user is required to take significant risk and make significant capital investments; e.g. there is a requirement to invest heavily in the new equipment and make large down payments, the equipment is subject to an extended delivery, there is no option to return equipment once it has been ordered and configuration and programming is a highly skilled task that costs in the region of £1,000 per day in engineering time.

It is an object of the present invention to attempt to reduce at least some of this risk and capital requirement.

In a first aspect, the invention provides a method of generating control commands for a robot to cause it to produce a stack of items, the method comprising the steps of accepting user input of a 3D coordinate of a base frame position; accepting user input of a 3D coordinate of a pre-place position, receiving a 3D digital model of the stack with stack coordinates stored relative to a known reference coordinate, interrogating the 3D model of the stack by cycling through each item and retrieving the 3D coordinates of each item, storing the retrieved coordinates as an item list, with an entry for each item, sorting the item list into a list of items sorted in vertical position in the stack, extracting an item's 3D coordinates from the item list in order, generating a placing coordinate by processing an item's 3D coordinates to apply an offset to each coordinate which is difference between the reference coordinate and the base frame position, issuing a control command to cause the robot to move to the pre-place coordinate position, issuing a control command to cause the robot to move to the placing coordinate position, and repeating the extracting from the item list steps until the entire item list has been traversed.

Optionally, the method may include the steps of determining the position of the previous item to have been stacked, comparing the x-coordinate of the previous item with the proposed x- coordinate of the current item and if the previous x-coordinate was less than the current x-coordinate, adding the pre-place X-offset to the next place position, or if the previous x-coordinate was more than the current x-coordinate, subtracting the pre-place X-offset from the next place position.

Optionally, the method may include the steps of determining the position of the previous item to have been stacked, comparing the y-coordinate of the previous item with the proposed y- coordinate of the current item and if the previous y-coordinate was less than the current y-coordinate, adding the pre-place Y-offset to the next place position, or if the previous y-coordinate was more than the current y-coordinate, subtracting the pre-place Y-offset from the next place position.

In a second aspect, the invention may provide apparatus for generating control commands for a robot to cause it to produce a stack of items, comprising computer processing means and computer memory and further comprising a robot control interface and a user interface and being arranged to receive user input via the user interface and to output robot control commands via the robot control interface and being further arranged to carry out the method steps of the first aspect.

The apparatus may include a plc to generate robot commands for directly feeding to a robot.

In a further aspect, the invention may provide a computer readable medium carrying computer program code which when executed on computer hardware, causes the hardware to carry out the method steps of the first aspect above.

The invention centres around producing a palletising cell that is effectively portable and not application specific. In broad terms, the invention concerns the development of robot cell software that can be implemented in multiple installations by non-skilled personnel, and that is easily re-configurable for different end users and scenarios as they arise.

A core point of differentiation for this invention is configurability. To achieve this and as explained in more detail below, it is necessary to ensure that the physical location of each device is adjustable without harming functionality in any respect and this may be achieved simply by entering the 3D coordinate of a base frame position. This adjustability is for three reasons:
1. It means that unlimited variations of the cell can be set up, because of the modular nature of the system, using the same software for each configuration.
2. It means that the cell can be erected and de-commissioned very quickly, saving engineer time and therefore costs.
3. It opens up the possibility of renting heavy industrialised duty robot cells for the first time in history, as the system is semi-mobile.

The software has been developed with this in mind, enabling total configurability by an unskilled operator, without jeopardising the capability of the finished equipment in any way.

In the context of this application, a robot is considered to encompass any automated, programmable handling system that is capable of movement on three or more axes.

The invention will now be described, way of example, with reference to the drawings in which:-
Figure 1 is a schematic block diagram of the whole system; and
Figure 2 is a flow-chart showing the data flow and decisions in the system.

### System Architecture

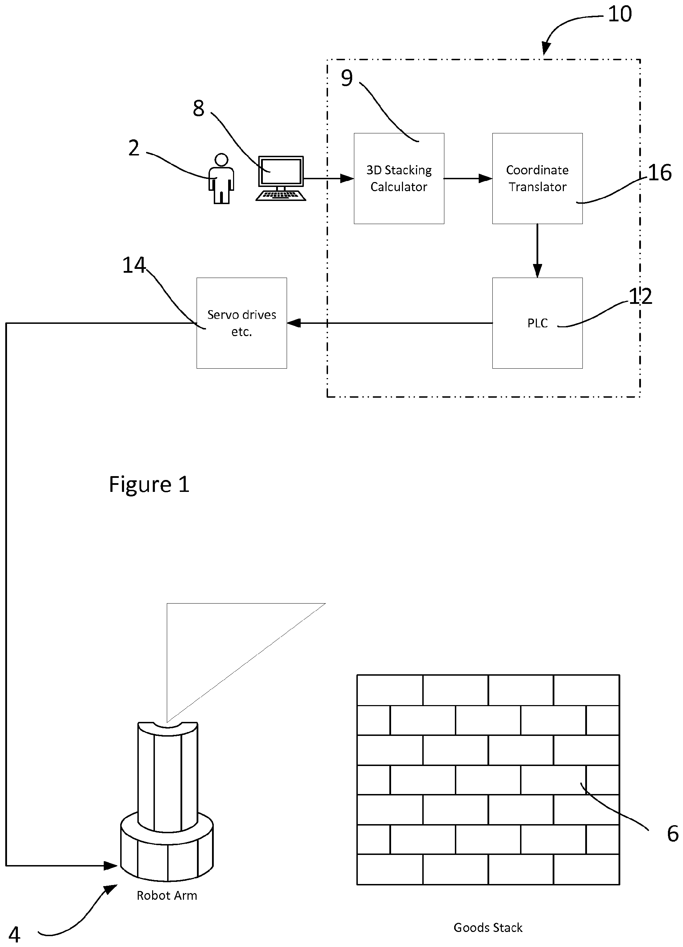

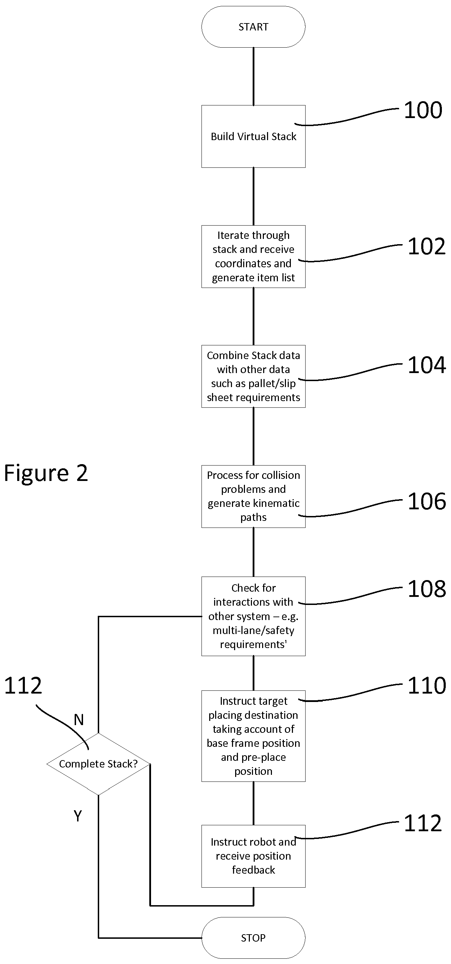

With reference to Figures 1 and 2, the various disciplines involved in getting from user input via a Graphical User Interface (GUI) to a functional automation system with servo-driven motion, are described below. An example architecture is also outlined below.

A user 2 wishes to configure a new palletising cell. The cell typically comprises a robotic arm 4 which is able to move typically in 3 dimensions and also to rotate along at least one axis. It typically also will include some form of picking and placing apparatus (an end effector) and be located within reach of a source of objects/items/goods, such as a conveyor (not shown) so that it can pick items from the conveyor and place them elsewhere. The palletising cell is provided so that a stack of goods 6, may be produced on a pallet for onward transportation, by picking them from the conveyor and placing each one in the correct positions and orientations to form a stable stack.

As noted above, this is a complex problem, which traditionally requires highly skilled (and therefore expensive) operatives to configure and maintain the cell. The apparatus described below provides a tool which automates much of the configuration so that implementation costs may be significantly reduced.

A console 8 is provided for the user to interact with the system, which has graphical user interface (GUI) and typically a keyboard. From the point of user interface, the first element of the GUI is a stack virtualisation system for building a theoretical or virtual representation of a desired final stack of goods (step 100). This may be completed for example using an open source solution, which runs in MS Windows called Stackbuilder 9 by TreeDim (www.treedim.com). The windows nature of this software makes it desirable (but not essential) to include a Windows PC 10 as a starting point for the environment. A Beckhoff industrial PC is a good option as this includes a real-time capable runtime that can be used as a programmable logic controller (PLC) 12 whilst allowing for seamless integration with MS Windows at the same time (Beckhoff TwinCAT). Thus much of the robot control and stack modelling can be carried out on the same hardware.

The stack modelling is carried out to calculate the most efficient way to stack the items within constraints such as the total weight and space constraints of the pallet, overall pallet loading limits, and to produce a stable stack which will also not crush the items at the bottom of the stack.

In this embodiment, because the Stackbuilder software does not provide a suitable interface to extract the complete stack model, the system includes a modification to the Windows open source stack virtualisation solution, to extract the required data and to write it in the relevant form to drive the robot motion via the Beckhoff PLC runtime.

The Windows environment (and in this embodiment, more Specifically, the Beckhoff runtime environment) allows code to be produced to convert information from the stack virtualisation system and feed it out in a form that the robot controller can understand, preferably over an industrial Ethernet-based protocol (such as EtherCAT).

The system also preferably includes robot application software, such as that written in Kuka KRL language and in the preferred embodiment deployed to a second integrated PC (IPC) 14 that forms a robot controller. This second PC manages the robot motion (typically by converting XYZ Cartesian information into required angles and therefore encoder target positions of each individual axis and then initiating the motion, by driving the robot to the desired location. It also manages the motion safety (typically by dealing with kinematic issues, for example, if the desired motion requires that an axis overrun its travel, the system prevents this from happening by calculating alternatives if possible, or halting the motion if it is not possible) and converts

The communication flow from operator to robot therefore runs from operator, to Windows, from Windows to PLC runtime (TwinCAT) 12, from TwinCAT to robot controller and then from robot controller to servo drive 14.

There are a number of requirements to solving the problem or arriving at the concept described above. These are described as individual components in the list below. Their order of implementation within the system is generally sequential in the order listed:-
1. Solve stack pattern configuration from a product size and pallet size input.
2. Extract the individual product positions from the chosen stack pattern configuration.
3. On the basis of the product input location and the desired output stack locations, convert the information into safe robot code.
4. Run robot code and control the cell.
5. Ensure that any equipment in the cell can be moved without jeopardising the above four points.

The implementation of these steps is described in detail below.

### 1 - Solve Stack Pattern Configuration

Solving stack pattern configuration options from a given product size and given pallet size is a problem that has already been addressed by existing software applications. This invention therefore uses an existing open source software product to deal with this element of the solution to provide a virtual model of the desired stack pattern.

Treedim StackBuilder software has been used in this case as this is entirely open source and provides for commercial adaptation and resale within the license agreement. This application is aimed at solving homogenous stack patterns only, thus lending itself well to the type of application that is commonly dealt with robotically. It create a digital stack model with a known position for each item in a theoretical stack, aligned to a known base coordinate position, such as one corner of the complete stack. Alternative applications that deal with different-sized packages could be used instead.

However, the output data format from this application is not suitable for onward use in this system and thus a data conversion step 2 as described below, must be carried out.

### 2 - Extract Product Positions

In order to generate a pallet stack robotically, the first requirement is to understand specifically where each product in the stack should be placed. Thus an edit to the stack virtualisation open source software is carried out to enable the individual product case positions to be extracted and placed in a collection of data within the software. This collection can then be manipulated in a useable form at machine code level to move the robot to the desired locations.

This element of the invention is implemented in a coordinate translator 16 and has been achieved with a code loop (step 102) that interrogates the StackBuilder analysis for a chosen stack pattern solution and finds the product positions. Having done this, the code cycles through each position, extracting X, Y and Z co-ordinates as well as the orientation of the product in question. This information is written into a new collection (or list of objects) within the invention, which in turn is eventually written into the runtime of the PLC controller for further control and manipulation.

The extracted information takes the form of co-ordinates in relation to a given co-ordinate frame which is entered by the user. This has been related to a Robot base or frame on the robot side which enables the pallet location to be moved around without changing any stack pattern position information. That is, the coordinates are created and stored as relative coordinates relative to a point which is known in relation to the robot's position, but need not be fixed in relation to any other points in space. This is a key element of the system's flexibility as it means that the final robot cell can be reconfigured and re-installed with minimal robot engineer input. The offset may be applied after modelling the stack, or during modelling of the stack.

### 3 - Convert Information to Robot Code

Initially, the positions are combined with other data such as pallet/slip sheet requirements (step 104), processed for collision problems and to generate kinematic paths (step 106) and checked for interactions with other systems - e.g. multi-lane/safety requirements (step 108).

In more detail, the generation of the motion paths (step 106) for the robot to move the products to the locations is achieved by means of a stack position index and a "new position request" signal that is sent by the robot controller after the previous placement has been completed.

The application program on the robot moves the robot to a position (steps 110 and 112) over a pick location and waits for an inbound product to arrive, e.g. on a conveyor. When this happens, the robot sends a request to the PLC runtime, asking for a new position. Before placement starts, The PLC runtime 12 sorts the positions in the stack pattern in such a way that the positions with the smallest Z values are first in the position list. Since the Z co-ordinate is the height location, this means that the bottom positions on the pallet are sent to the robot first, so that the stack is built from the bottom up. Having sorted the positions, the PLC then applies an index reference to each one.

When the PLC 12 receives a new position request from the robot, it interrogates the position list for the position with the current index value required and writes the coordinates and orientation values of this position to predefined variables in the robot. The PLC then increments the current index value by one so that the next position in the stack is presented and sent following the next request from the robot.

In order to safely move the product to a position adjoining the previous product, it is necessary to move to a preliminary position that is clear of the final stack and provides a clear path to the final desired location. Failure to do this results in the robot, the end effector and the product being handled potentially colliding with the stack and upsetting and damaging it before stacking is completed. For the purposes of this system, the preliminary position has been called the "pre-place" position. The operator interface allows users to set values for this position in the X, Y and Z directions. These offsets are then applied to the final position co-ordinates and the sum of these is sent to the robot as well as the final position co-ordinates.

A second layer of logic is applied here, as it is necessary to ensure that the "pre-place" position is clear of the previously stacked product in both the X and Y axes. This logic interrogates the previous positions of products that have been already stacked on the pallet, if the last, varying X value was less than the current X value, the clear side of the stack will be positions with a greater X value than the final position X. Therefore the pre-place X-offset should be added to the desired position. If the reverse is true then the pre-place X-offset should be subtracted from the final position X. This logic is also applied to the Y axis, with the result that the operator can simply enter the three offset values and not be concerned about interference between products when they are being stacked.

Having been presented with position information, the robot picks a product and moves to the pre-place position. From here, it has a clear path to the final product position without interfering with any adjoining product or other hardware. Once it has moved to the final product location and placed the product on the stack, the robot then moves up clear of the stack and requests a new position. Then the robot program continues in a cyclic fashion, requesting a new product place position and a new pre-place position each time a product is picked. The top level cell controls pause the process when the stacking index reaches the total number of products that exist on the pallet; meaning the pallet stack is complete (step 114).

This whole methodology relates to robot frame positions in relation to a secondary robot base. Since bases are totally configurable and adjustable in terms of their X, Y, Z, A, B and C positions (X, Y & Z Cartesian axes and respective rotations A, B, C about those axes) in 3D space, this provides a very flexible solution to creating robot code from the pallet configuration data as the pallet stacking can take place anywhere in the cell and the whole cell configuration can be set up in minutes. This means that the system is able to be installed, de-commissioned and moved very easily. The advantage of this factor is that potential robot users could have the opportunity to rent a robot cell for the first time in robotics. This is made realisable because of the adjustable nature of the software as described above.

### 4 - Top Level Cell Controls

The fourth element of this solution is to use a PLC runtime to control the robot cell in a conventional manner. The individual elements and output devices of any robot cell are switched, managed and speed controlled on the basis of the input devices and sensors. This is usually done using a PLC controller so the most rational approach involves including this functionality within this system.

The basic logic surrounding this element of the solution is the same irrespective of how the cell is configured, since the control logic does not differ based on the location of cell hardware. It is made configurable only by the use of universal output devices, universal input devices, and universal input device connections and universal output device connections to the control panel. Operators are then presented with the option to choose which outputs on the control panel are associated with each output device, meaning that cell setup is much easier and quicker in hardware terms.

The skilled person will appreciate that although the preferred embodiments have been described in terms of Cartesian coordinates, other coordinate systems may be substituted.

The skilled person will appreciate that although the preferred embodiments have been described in terms computer hardware running the Windows operating system, other operating systems and/or hardware may be substituted. For example, a separate plc may be used in place of the Windows-based system described above. The skilled person will appreciate that although described on connection with a palletising operation, this invention has general applicability to any automated, robotised stacking operation.

## Claims

1. A method of generating control commands for a robot to cause it to produce a stack of items, the method comprising the steps of :-
(a) accepting user input of a 3D coordinate of a base frame position;
(b) receiving a 3D digital model of the stack with stack coordinates for each item stored relative to a known reference coordinate,
(c) sorting the coordinates for each item into a list of items sorted in vertical position in the stack
(d) extracting an item's 3D coordinates from the item list in order,
(e) generating a placing coordinate by processing an item's 3D coordinates to apply an offset to each coordinate which is the difference between the item's coordinates and the base frame position;
(f) issuing a control command to cause the robot to move to the placing coordinate position.
(g) repeating steps (d) to (f) until the entire item list has been traversed.

2. A method according to claim 1 including the steps of:-
(a) receiving a 3D digital model of the stack by interrogating the 3D model of the stack by cycling through each item and retrieving the 3D coordinates of each item,
(b) storing the retrieved coordinates in the tem list, with an entry for each item

3. A method according to claim 1 or claim 2, including the steps of:-
(a) determining the position of the previous item to have been stacked,
(b) comparing the x-coordinate of the previous item with the proposed x-coordinate of the current item and
(i) if the previous x-coordinate was less than the current x-coordinate, adding the pre-place X-offset to the next place position, or
(ii) if the previous x-coordinate was more than the current x-coordinate, subtracting the pre-place X-offset from the next place position.

4. A method according to any preceding claim, including the steps of:-
(a) determining the position of the previous item to have been stacked,
(b) comparing the y-coordinate of the previous item with the proposed y-coordinate of the current item and
(i) if the previous y-coordinate was less than the current y-coordinate, adding the pre-place Y-offset to the next place position, or
(ii) if the previous y-coordinate was more than the current y-coordinate, subtracting the pre-place Y-offset from the next place position.

5. A method according to any preceding claim including creating the 3D digital model of the stack.

6. A method according to any preceding claim including accepting user input of a 3D coordinate of a pre-place position, and issuing a control command to cause the robot to move to the pre-place coordinate position, before the step of issuing a control command to cause the robot to move to the placing coordinate position.

7. Apparatus for generating control commands for a robot to cause it to produce a stack of items, comprising computer processing means and computer memory and further comprising a robot control interface and a user interface and being arranged to receive user input via the user interface and to output robot control commands via the robot control interface and being further arranged to carry out the method steps of any preceding claim.

8. Apparatus according to claim 7, wherein the apparatus includes a plc to generate robot commands for directly feeding to a robot.

9. A computer readable medium carrying computer program code which when executed on computer hardware, causes the hardware to carry out the method steps of any of claims 1 to 6.

## Amended claims

### Amended claims in accordance with Rule 137(2) EPC.

1. A method of generating control commands for a robot to cause it to produce a stack of items, the method comprising the steps of :-
(a) accepting user input of a 3D coordinate of a base frame position;
(b) receiving a 3D digital model of the stack with stack coordinates for each item stored relative to a known reference coordinate,
(c) sorting the coordinates for each item into a list of items sorted in vertical position in the stack
(d) extracting an item's 3D coordinates from the item list in order,
(e) generating a placing coordinate by processing an item's 3D coordinates to apply an offset to each coordinate which is the difference between the item's coordinates and the base frame position;
(f) issuing a control command to cause the robot to move to the placing coordinate position.
(g) repeating steps (d) to (f) until the entire item list has been traversed,
(h) accepting user input of a 3D coordinate of a pre-place position, and
(i) determining the position of a previous item to have been stacked,
(j) generating a pre-place x position by comparing the x-coordinate of the previous item with a proposed x- coordinate of a current item and
(i) if the x-coordinate of the previous item was less than the x-coordinate of the current item, calculating the pre-place x position by adding a pre-place X-offset to the next place position, or
(ii) if the x-coordinate of the previous item was more than the x-coordinate of the current item, calculating the pre-place x position by subtracting a pre-place X-offset from the next place position.
(k) generating a pre-place y position by comparing the y-coordinate of the previous item with the proposed y-coordinate of the current item and
(i) if the y-coordinate of the previous item was less than the y-coordinate of the current item, calculating the pre-place y position by adding a pre-place Y-offset to the next place position, or
(ii) if the y-coordinate of the previous item was more than the y-coordinate of the current item, calculating the pre-place y position by subtracting a pre-place Y-offset from the next place position.

2. A method according to claim 1 including the steps of:-
(a) receiving a 3D digital model of the stack by interrogating the 3D model of the stack by cycling through each item and retrieving the 3D coordinates of each item,
(b) storing the retrieved coordinates in the item list, with an entry for each item

3. A method according to any preceding claim including creating the 3D digital model of the stack.

4. A method according to any preceding claim including issuing a control command to cause the robot to move to the pre-place coordinate position, before the step of issuing a control command to cause the robot to move to the placing coordinate position.

5. Apparatus for generating control commands for a robot to cause it to produce a stack of items, comprising computer processing means and computer memory and further comprising a robot control interface and a user interface and being arranged to receive user input via the user interface and to output robot control commands via the robot control interface and being further arranged to carry out the method steps of any preceding claim.

6. Apparatus according to claim 5, wherein the apparatus includes a plc to generate robot commands for directly feeding to a robot.

7. A computer readable medium carrying computer program code which when executed on computer hardware, causes the hardware to carry out the method steps of any of claims 1 to 4.
